## Europäisches Patentamt

(19) **European Patent Office**

**Office européen des brevets**

(11) Veröffentlichungsnummer: **0 065 157**
**B1**

(12) # EUROPÄISCHE PATENTSCHRIFT

(45) Veröffentlichungstag der Patentschrift:
13.02.85

(51) Int. Cl.⁴: **B 60 B 17/00**

(21) Anmeldenummer: **82103710.8**

(22) Anmeldetag: **30.04.82**

(54) **Körperschalldämpfer für ein Laufrad.**

(30) Priorität: 15.05.81 DE 3119497

(43) Veröffentlichungstag der Anmeldung:
24.11.82 Patentblatt 82/47

(45) Bekanntmachung des Hinweises auf die Patenterteilung:
13.02.85 Patentblatt 85/7

(84) Benannte Vertragsstaaten:
AT BE CH DE FR GB IT LI LU NL SE

(56) Entgegenhaltungen:
DE - A - 2 229 420

(73) Patentinhaber: **M.A.N. MASCHINENFABRIK AUGSBURG-NÜRNBERG Aktiengesellschaft, Bahnhofstrasse 66, D-4200 Oberhausen 11 (DE)**

(72) Erfinder: **Bschorr, Oskar, Dr. Dipl.-Ing., Kepplerstrasse 11, D-8000 München 80 (DE)**
Erfinder: **Albrecht, Helmut, Dipl.-Ing., Flolgerweg 10a, D-8160 Miesbach (DE)**
Erfinder: **Brühl, Stephan, Dipl.-Ing., Hauptstrasse 23, D-8014 Neubiberg (DE)**
Erfinder: **Paluszkiewicz, Manfred, Kärntenerstrasse 38, D-4200 Oberhausen 1 (DE)**
Erfinder: **Weber, Wolfgang, Preussenstrasse 30, D-4200 Oberhausen 11 (DE)**

EP 0 065 157 B1

## Beschreibung

Die Erfindung betrifft einen Körperschalldämpfer für ein Laufrad, insbesondere für ein Schienenrad, mit in Umfangsrichtung nebeneinander angeordneten Wellenleitern in Form von Hornteilen, welche an der Basisfläche mit dem Laufrad kraftschlüssig verbunden sind, wodurch die Hornteile eine Kreisringscheibe bilden und zumindest teilweise mit einer Dämpfungsmasse bedeckt sind.

Ein derartiger Körperschalldämpfer ist beispielsweise aus der DE-PS 2 652 874 bekannt. Bei der bekannten Ausführung des Körperschalldämpfers werden die hornteilförmigen Wellenleiter im Prinzip durch eine Segmentierung einer Scheibe gebildet, so daß die effektive Länge eines derartigen Hornteils im wesentlichen dem Radius der Scheibe entspricht. Falls die Mitte des Körperschalldämpfers noch eine Aussparung für die Achse des Laufrades aufweisen soll, so wäre die Länge der einzelnen Hornteile noch weiter beschränkt. In diesem Fall läßt sich eine geringfügige Vergrößerung der wirksamen Hornteillänge durch einen v-förmigen Schlitz erzielen, dessen Spitze und dessen v-förmige Schenkel noch innerhalb des Wellenleitermaterials enden.

In vielen Fällen ist jedoch die Hornteillänge bzw. der Verjüngungsgrad des Hornteils, durch welche im wesentlichen die untere Grenze des wirksam bedämpften Frequenzbereichs festgelegt wird, nicht ausreichend.

Es ist daher Aufgabe der Erfindung, einen Körperschalldämpfer für ein Laufrad zu schaffen, der auch in niedrigeren Frequenzen als bisher eine wirksame Dämpfung von Körperschallschwingungen ermöglicht.

Diese Aufgabe wird erfindungsgemäß durch die im kennzeichnenden Teil des Patentanspruchs 1 aufgeführten Merkmale gelöst.

Bei gleichbleibender Basisfläche eines Hornteils wird sowohl durch die Maßnahmen nach den Patentansprüchen ein kleinerer Verjüngungsgrad eines Hornteils und damit eine niedrigere Grenzfrequenz erreicht. Die akustische Anpassung eines derartigen Körperschalldämpfers bei einer durch das Laufrad vorgegebenen Geometrie wird damit wesentlich erleichtert.

Vorteilhafte Ausgestaltungen von erfindungsgemäßen Körperschalldämpfern können den Unteransprüchen bzw. den nachfolgend beschriebenen Figuren entnommen werden.

Es zeigt in teilweise schematischer Darstellung

Fig. 1a die Aufsicht auf einen Körperschalldämpfer mit tangential an einen Innenradius in verlaufenden Hornteilen an einem Schienenrad;

Fig. 1b einen Körperschalldämpfer gemäß Fig. 1a, dessen Wellenleiter in weitere hornteilförmige Segmente unterteilt sind;

Fig. 2 einen Querschnitt durch einen Körperschalldämpfer gemäß Fig. 1a oder 1b mit zusätzlicher Abdeckung.

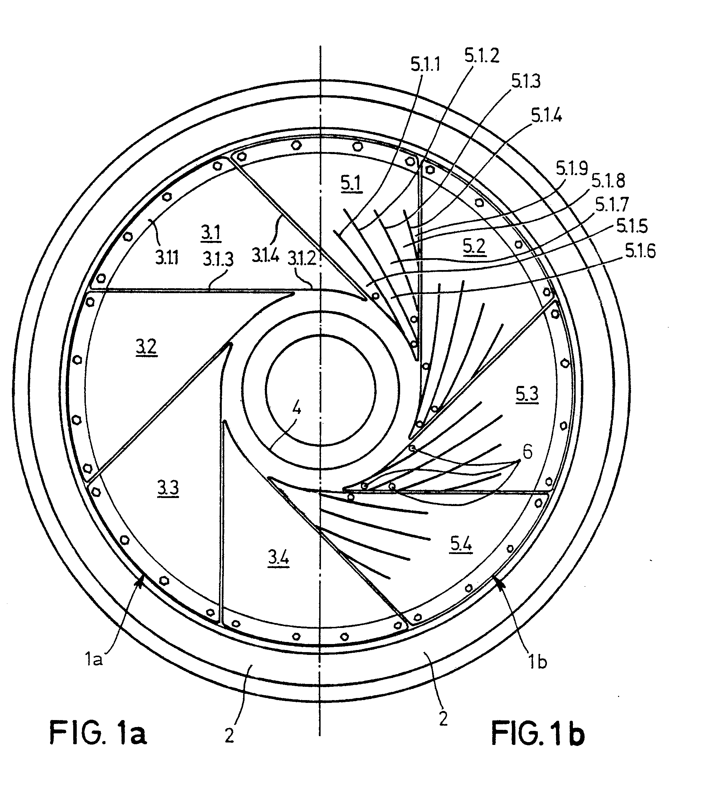

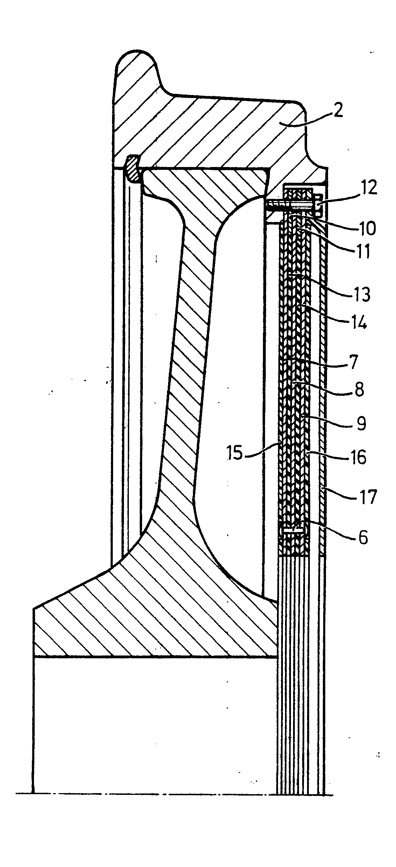

Der in den Fig. 1a und 1b dargestellte Körper-schalldämpfer 1a bzw. 1b ist am Radkranz 2 eines Schienenrades befestigt und bedeckt den größten Teil der Radscheibe, ohne sie zu berühren. Der Körperschalldämpfer 1a wird durch in Umfangsrichtung nebeneinander angeordnete Wellenleiter in Form von Hornteilen 3.1 bis 3.4 gebildet, welche zumindest einseitig mit einer Dämpfungsmasse bedeckt sind (siehe Fig. 2). Jedes so gebildete Hornteil ist mit seiner Basisfläche 3.1.1 kraftschlüssig mit dem Radkranz 2 des Schienenrades verbunden, so daß nur über die Basisfläche Körperschallschwingungen in den Wellenleiter eingekoppelt werden. Die der Basisfläche 3.1.1 gegenüberliegende Seite 3.1.2 des Hornteils ist Teil des Innenradius des kreisringscheibenförmigen Körperschalldämpfers. Durch diesen Innenradius tritt die Radachse 4 hindurch. Die beiden geradlinigen Seiten 3.1.3 und 3.1.4 eines Hornteils laufen im wesentlichen tangential an den Innenradius der Kreisringscheibe. Bei gleichbleibender Basisfläche hat ein derartiges Hornteil eine größere Länge als ein Hornteil mit radial verlaufenden Seitenflächen. Der durch die Seiten 3.1.3 und 3.1.4 eingeschlossene Winkel und damit der Verjüngungsgrad des Hornteils ist dadurch kleiner als bei dem bekannten Körperschalldämpfer.

Bei dem in Fig. 1b beschriebenen Ausführungsbeispiel sind die äußeren Abmessungen und die Anordnung der Wellenleiter 5.1 bis 5.4 ähnlich denen in Fig. 1a. Jeder Wellenleiter 5.1 weist jedoch zusätzlich Einschnitte 5.1.1 bis 5.1.4 auf, welche leicht gekrümmt sind und vom Bereich der Spitze des Wellenleiters fächerartig ausgehen. Durch diese Schlitze wird der hornteilförmige Wellenleiter 5.1 in weitere hornteilförmige Segmente 5.1.5 bis 5.1.9 mit unterschiedlichem Verjüngungsgrad unterteilt. Diese Unterteilung betrifft etwa $2/3$ bis $3/4$ der Wellenleiterfläche. Die Enden der langen hornteilförmigen Segmente 5.1.5, 5.1.6 und 5.1.7 weisen Löcher 6 auf, so daß mehrere übereinander angeordnete deckungsgleiche Wellenleiter 5.1 (siehe Fig. 2) an den Enden miteinander, beispielsweise durch Nieten, verbunden werden können. Dadurch wird vermieden, daß bei hohen Umfangsgeschwindigkeiten die freien und relativ schwachen Enden der Hornteilsegmente sich aufrichten und radial nach außen gebogen werden.

Die Fig. 2 zeigt einen Querschnitt durch ein Schienenrad und einen daran befestigten Körperschalldämpfer gemäß Fig. 1a oder b, welcher aus mehreren übereinander angeordneten und deckungsgleichen Wellenleitern 7, 8 und 9, entsprechend denen aus Fig. 1a oder 1b besteht. Die Wellenleiter 7, 8 und 9 sind an ihrer Basisfläche mittels Distanzstücken 10 und 11 zu einer gemeinsamen Basis verbunden und mittels Schrauben 12 mit dem Radkranz 2 kraftschlüssig verbunden. Zwischen den Wellenleitern 7, 8 und 9 befinden sich Lagen 13 und 14 aus einer Dämpfungsmasse, z. B. Gummi u. dgl. Die Lagen 13 und 14 können entweder durchgehend über alle Wellenleiter bzw. hornteilförmigen Segmente verlaufen oder an deren Grenzen eingeschnitten sein. Auf den Außenflächen des Körperschalldämpfers ist jeweils ein schalldämpfender Belag 15 und 16 aufgeklebt, der vorteilhafterweise mehrere Wellenleiter bzw. hornteilförmige Segmente überdeckt und relativ reißfest ist. Dadurch werden Beschädigungen der Wellenleiter vermieden. Die mechanisch relativ schwachen Spitzen der Wellenleiter 7, 8 und 9 werden mittels einer Niete 6 zusammengehalten und damit ebenfalls vor Verbiegungen geschützt.

Ein weiterer Schutz vor mechanischen Einflüssen wird durch eine biegesteife Scheibe 17 gewährleistet, welche konzentrisch zum Körperschalldämpfer in einem gewissen Abstand angeordnet und über die Schrauben 12 ebenfalls am Radkranz befestigt ist.

## Patentansprüche

1. Körperschalldämpfer (1a, 1b) für ein Laufrad, insbesondere für ein Schienenrad, mit in Umfangsrichtung nebeneinander angeordneten Wellenleitern in Form von Hornteilen (3.1, 3.2 ... 5.1, 5.2 ...), welche an der Basisfläche mit dem Laufrad kraftschlüssig verbunden sind, wodurch die Hornteile eine Kreisringscheibe bilden und zumindest teilweise mit einer Dämpfungsmasse (13, 14) bedeckt sind, dadurch gekennzeichnet, daß die Kreisringscheibe die Radachse (4) mit einer kreisförmigen Öffnung umgibt und daß zumindest je eine Seite (3.1.3, 3.1.4) der sich verjüngenden Seiten des Hornteiles tangential an den Innenradius der kreisförmigen Öffnung der Kreisringscheibe hin verläuft.

2. Körperschalldämpfer nach Anspruch 1, dadurch gekennzeichnet, daß zumindest ein Teil der Wellenleiter (5.1, 5.2 ...) in weitere hornteilförmige Segmente (5.1.5 bis 5.1.9) unterteilt ist.

3. Körperschalldämpfer nach Anspruch 1 oder 2, dadurch gekennzeichnet, daß die hornteilförmigen Segmente (5.1.5 bis 5.1.9) unterschiedliche Verjüngungsgrade aufweisen.

4. Körperschalldämpfer nach einem der Ansprüche 1 bis 3, gekennzeichnet durch zwei oder mehrere deckungsgleich übereinander angeordnete Wellenleiter (7, 8, 9), zwischen denen die Dämpfungsmasse (13, 14) angeordnet ist und die über eine gemeinsame Basis (10, 11, 12) mit dem Laufrad kraftschlüssig verbunden sind.

5. Körperschalldämpfer nach einem der Ansprüche 1 bis 4, dadurch gekennzeichnet, daß ein oder mehrere Wellenleiter (7, 9) zumindest einseitig mit einem durchgehenden, schalldämpfenden Belag (15, 16) überzogen ist bzw. sind.

6. Körperschalldämpfer nach Anspruch 4 oder 5, dadurch gekennzeichnet, daß die freien, deckungsgleich übereinander angeordneten Enden der Wellenleiter (7, 8, 9) miteinander verbunden sind (Niete 6).

7. Körperschalldämpfer nach einem der Ansprüche 1 bis 6, dadurch gekennzeichnet, daß die Wellenleiter (7, 8, 9) zwischen der Radscheibe des Laufrades (2) und einer dazu konzentrischen, biegesteifen Scheibe (17) angeordnet sind, wobei die Scheibe an dem Laufrad oder an den Basisflächen der Wellenleiter befestigt ist.

## Claims

1. Device (14, 16) for damping sound conducted through a solid, for use on a travelling wheel, in particular for a track wheel, having wave conductors in the form of horn shaped elements (3.1, 3.2 ... 5.1, 5.2 ...) arranged side by side in the circumferential direction and positively connected to the travelling wheel at the basal surface so that the horn shaped elements form an annular disc and are at least partly covered by a damping mass (13, 14), characterised in that the annular disc surrounds the wheel axis (4) with a circular opening and that at least one side (3.1.3, 3.1.4) of the tapering sides of the horn shaped element extends tangentially to the internal radius of the circular opening of the annular disc.

2. Device for damping sound conducted through a solid according to claim 1, characterised in that at least some of the wave conductors (5.1, 5.2 ...) are further subdivided into horn shaped segments (5.1.5 to 5.1.9).

3. Device for damping sound conducted through a solid according to claim 1 or claim 2, characterised in that the horn shaped segments (5.1.5 to 5.1.9) have differing degrees of tapering.

4. Device for damping sound conducted through a solid according to claims 1 to 3, characterised by two or more wave conductors (7, 8, 9) arranged to cover each other, between which the damping mass (13, 14) is arranged and which are positively connected to the travelling wheel through a common base (10, 11, 12).

5. Device for damping sound conducted through a solid according to one of the claims 1 to 4, characterised in that one or more wave conductors (7, 9) is or are covered at least on one side with a continuous sound damping layer (15, 16).

6. Device for damping sound conducted through a solid according to claim 4 or claim 5, characterised in that the free ends of the wave conductors (7, 8, 9), which ends are arranged one above the other to cover each other, are connected together (rivet 6).

7. Device for damping sound conducted through a solid according to one of the claims 1 to 6, characterised in that the wave conductors (7, 8, 9) are arranged between the wheel disc of the travelling wheel (2) and an inflexible disc (17) which is concentric thereto, the disc being attached to the travelling wheel or to the basal surfaces of the wave conductors.

## Revendications

1. Amortisseur de bruit pour corps vibrant (1a, 1b) pour une roue de volant, notamment pour une roue sur rail, avec des conducteurs d'onde juxtaposés en direction du pourtour en forme de pièces de cornes ($J_1$, $J_2$ ... $S_1$, $S_2$ ...) qui sont reliées, sur la surface de base, par intervention de force, avec la roue de volant, de telle sorte qu'elles forment une plaque annulaire circulaire et soient recouvertes, au moins en partie, avec une masse d'amortissement, amortisseur caractérisé en ce que la plaque annulaire circulaire entoure l'arc de roue (4) avec une ouverture circulaire, au moins l'un des côtés (3.1.3, 3.1.4) des côtés se rétrécissant de la pièce en forme de corne s'étendant tangentiellement au rayon intérieur de l'ouverture de forme circulaire de la plaque annulaire circulaire.

2. Amortisseur de bruit suivant la revendication 1, caractérisé en ce que, au moins une partie des conducteurs d'ondes (5.1, 5.2 ...) est partagée en d'autres segments en forme de portions de cornes (5.1.5 à 5.1.9).

3. Amortisseur de bruit suivant l'une des revendications 1 ou 2, caractérisé en ce que les segments en forme de portions de corne (5.1.5 à 5.1.9) présentent des degrés de rétrécissement différents.

4. Amortisseur de bruit suivant l'une quelconque des revendications 1 à 3, caractérisé en ce que deux ou plusieurs conducteurs d'ondes (7, 8, 9) sont disposés l'un au-dessus de l'autre à la manière d'un couvercle, entre lesquels est placée la masse d'amortissement (13, 14), et qui sont reliés à force avec la roue de volant par l'intermédiaire d'une base commune (10, 11, 12).

5. Amortisseur de bruit suivant l'une quelconque des revendications 1 à 4, caractérisé en ce qu'un ou plusieurs conducteurs d'ondes (7, 9) sont recouverts, au moins sur un côté, avec une couche continue amortissant le bruit (15, 16).

6. Amortisseur de bruit suivant l'une des revendications 4 ou 5, caractérisé en ce que les extrémités libres, superposées à la manière d'un couvercle, des conducteurs d'ondes (7, 8, 9) sont reliées entre elles (rivet 6).

7. Amortisseur de bruit suivant l'une quelconque des revendications 1 à 6, caractérisé en ce que les conducteurs d'ondes (7, 8, 9) sont disposés entre le flasque de roue de la roue de volant (2) et une plaque concentrique rigide contre la flexion (17), laquelle est fixée à la roue de volant ou aux surfaces de base des conducteurs d'ondes.

FIG. 1a          FIG. 1b